# EUROPEAN PATENT APPLICATION

(11) **EP 3 389 323 A1**
(43) Date of publication of application: **17.10.2018**
(21) Application number: 16877774.6
(22) Date of filing: 22.12.2016
(51) Int. Cl.: H04W 72/04

(54) **METHOD, APPARATUS AND SYSTEM FOR SCHEDULING UPLINK TRAFFIC RESOURCE**

(30) Priority: 25.12.2015 CN 201510991273
(71) Applicant: Huawei Technologies Co., Ltd., Longgang District Shenzhen, Guangdong 518129 (CN)
(72) Inventor: CHEN, Liang, Shenzhen Guangdong 518129 (CN); LI, Xue, Shenzhen Guangdong 518129 (CN); YUE, Rui, Shenzhen Guangdong 518129 (CN); HAN, Guanglin, Shenzhen Guangdong 518129 (CN)
(74) Representative: Gill Jennings & Every LLP
(86) International application number: PCT/CN2016/111581
(87) International publication number: WO 2017/107964

(57) **Abstract**

Embodiments of the present invention provide an uplink traffic resource scheduling method, a device, and a system. The method includes: determining, by a terminal, a transmission pattern for a scheduling request based on to-be-transmitted uplink data, where the transmission pattern is used to indicate code channel resources that are in one uplink subframe and that are used to carry the scheduling request, and the scheduling request is used to request to schedule an uplink traffic resource to transmit the uplink data; and sending the scheduling request to a network device by using the code channel resources indicated by the transmission pattern, so that the network device schedules, for the terminal based on the code channel resources carrying the scheduling request, an uplink traffic resource corresponding to the transmission pattern. Therefore, according to the embodiments of the present invention, a quantity of times of interaction between the terminal and the network device is reduced, and a delay in scheduling the uplink traffic resource is reduced, thereby improving data transmission efficiency of the terminal.

## Description

### TECHNICAL FIELD

Embodiments of the present invention relate to the field of communications technologies, and in particular, to an uplink traffic resource scheduling method, a device, and a system.

### BACKGROUND

During uplink scheduling of existing LTE communication, a terminal transmits a scheduling request (English: Scheduling Request, SR for short) in a control message format (English: format) 1 on a physical uplink control channel (English: Physical Uplink Control CHannel, PUCCH for short). The SR is only used to notify a network device (for example, an eNodeB) whether the terminal has a requirement on resources. After receiving the SR, the eNodeB delivers a UL Grant and first allocates a small quantity of resources to the terminal, and then the terminal reports a buffer status report (English: Buffer Status Reports, BSR for short) to the eNodeB by using the small quantity of resources, to notify the eNodeB of an amount of data that needs to be transmitted by the terminal. After receiving the BSR reported by the terminal, the eNodeB performs a comprehensive analysis according to the BSR reported by the terminal and existing resources of the eNodeB to determine to schedule, for the terminal, an uplink traffic resource for transmitting data.

However, in the prior art, during scheduling of an uplink traffic resource for the terminal by the eNodeB, the terminal needs to exchange information with the eNodeB for many times. A delay in scheduling the uplink traffic resource is increased, and data transmission efficiency of the terminal is reduced.

### SUMMARY

Embodiments of the present invention provide an uplink traffic resource scheduling method, a device, and a system, to reduce a delay in scheduling an uplink traffic resource, and improve data transmission efficiency of a terminal. The technical solutions include the following methods and devices:

According to a first aspect, an embodiment of the present invention provides an uplink traffic resource scheduling method, including: determining, by a terminal, a transmission pattern for a scheduling request based on to-be-transmitted uplink data, where the transmission pattern is used to indicate code channel resources that are in one uplink subframe and that are used to carry the scheduling request, and the scheduling request is used to request to schedule an uplink traffic resource to transmit the uplink data; and then sending the scheduling request to a network device by using the code channel resources indicated by the transmission pattern, so that the network device schedules, for the terminal based on the code channel resources carrying the scheduling request, an uplink traffic resource corresponding to the transmission pattern. In this way, a quantity of times of interaction between the terminal and the network device is reduced, and a delay in scheduling the uplink traffic resource is reduced, thereby improving data transmission efficiency of the terminal.

According to the first aspect, in a first possible implementation of the first aspect, the determining, by a terminal, a transmission pattern for a scheduling request based on to-be-transmitted uplink data includes: determining the transmission pattern for the scheduling request based on at least one of the following information: a data amount and an emergency degree of the uplink data, so that the uplink traffic resource scheduled by the network device for the terminal matches the data amount and/or the emergency degree of the uplink data.

According to the first aspect or the first possible implementation of the first aspect, in a second possible implementation of the first aspect, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

According to any one of the first aspect or the foregoing possible implementations of the first aspect, in a third possible implementation of the first aspect, the determining, by a terminal, a transmission pattern for a scheduling request based on to-be-transmitted uplink data includes: determining, in K preset scheduling request transmission patterns based on the to-be-transmitted uplink data, the transmission pattern for the scheduling request that corresponds to the to-be-transmitted uplink data, where the K preset scheduling request transmission patterns are obtained by M preset code channel resources for carrying a scheduling request, K is a positive integer less than or equal to M*M, and M is a positive integer greater than or equal to 2. Therefore, types of the transmission patterns for the SR are increased.

According to the third possible implementation of the first aspect, in a fourth possible implementation of the first aspect, M is 2 or 3, thereby ensuring reliability of scheduling of the uplink traffic resource.

According to any one of the first aspect or the foregoing possible implementations of the first aspect, in a fifth possible implementation of the first aspect, the first timeslot and the second timeslot each include N resource blocks (English: Resource Block, RB for short), the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

According to any one of the first aspect or the foregoing possible implementations of the first aspect, in a sixth possible implementation of the first aspect, the terminal includes a first antenna and a second antenna;
the determining, by a terminal, a transmission pattern for a scheduling request based on to-be-transmitted uplink data includes: determining, according to the to-be-transmitted uplink data, a transmission pattern for the scheduling request that corresponds to the first antenna and a transmission pattern for the scheduling request that corresponds to the second antenna; and
the sending, by the terminal, the scheduling request to a network device by using the code channel resources indicated by the transmission pattern includes: sending the scheduling request to the network device by using the first antenna and a code channel resource indicated by the transmission pattern for the scheduling request that corresponds to the first antenna; and sending the scheduling request to the network device by using the second antenna and a code channel resource indicated by the transmission pattern for the scheduling request that corresponds to the second antenna, where
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

According to a second aspect, an embodiment of the present invention provides an uplink traffic resource scheduling method, including: receiving, by a network device, a scheduling request sent by a terminal, where the scheduling request is used to request to schedule an uplink traffic resource to transmit uplink data; determining a transmission pattern for the scheduling request based on code channel resources for carrying the scheduling request, where the transmission pattern for the scheduling request is used to indicate code channel resources that are in one uplink subframe and that are used to carry the scheduling request; and then scheduling an uplink traffic resource for the terminal according to the transmission pattern for the scheduling request. In this way, a quantity of times of interaction between the terminal and the network device is reduced, and a delay in scheduling the uplink traffic resource is reduced, thereby improving data transmission efficiency of the terminal.

According to the second aspect, in a first possible implementation of the second aspect, the scheduling, by the network device, an uplink traffic resource for the terminal according to the transmission pattern for the scheduling request includes: determining a type of the scheduling request based on the transmission pattern for the scheduling request, where the type of the scheduling request is used to indicate at least one of the following information: a data amount of the uplink data and an emergency degree of the uplink data; and scheduling the uplink traffic resource for the terminal according to the type of the scheduling request, so that the uplink traffic resource scheduled by the network device for the terminal matches the data amount and/or the emergency degree of the uplink data.

According to the second aspect or the first possible implementation of the second aspect, in a second possible implementation of the second aspect, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

According to any one of the second aspect or the foregoing possible implementations of the second aspect, in a third possible implementation of the second aspect, the determining, by the network device, a transmission pattern for the scheduling request based on code channel resources for carrying the scheduling request includes: determining, in K preset scheduling request transmission patterns based on the code channel resources for carrying the scheduling request, the transmission pattern for the scheduling request that corresponds to the uplink data, where the M*M preset scheduling request transmission patterns are obtained by M preset code channel resources for carrying a scheduling request, K is a positive integer less than or equal to M*M, and M is a positive integer greater than or equal to 2. Therefore, types of the transmission patterns for the SR are increased.

According to the third possible implementation of the second aspect, in a fourth possible implementation of the second aspect, M is 2 or 3, thereby ensuring reliability of scheduling of the uplink traffic resource.

According to any one of the second aspect or the foregoing possible implementations of the second aspect, in a fifth possible implementation of the second aspect, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N; and
the determining, by the network device, a transmission pattern for the scheduling request based on code channel resources for carrying the scheduling request includes: determining, based on the code channel resources for carrying the scheduling request, that the first code channel resource in the first timeslot belongs to the i^{th} RB and the second code channel resource in the second timeslot belongs to the j^{th} RB; and determining the transmission pattern for the scheduling request based on the i^{th} RB in the first timeslot and the j^{th} RB in the second timeslot.

According to any one of the second aspect or the foregoing possible implementations of the second aspect, in a sixth possible implementation of the second aspect, the terminal includes a first antenna and a second antenna;
the receiving, by a network device, a scheduling request sent by a terminal includes: receiving the scheduling request that is sent by the terminal by using the first antenna and the scheduling request that is sent by the terminal by using the second antenna;
the determining, by the network device, a transmission pattern for the scheduling request based on code channel resources for carrying the scheduling request includes: determining, according to a code channel resource for carrying the scheduling request that is sent by the terminal by using the first antenna, a transmission pattern for the scheduling request that corresponds to the first antenna; and determining, according to a code channel resource for carrying the scheduling request that is sent by the terminal by using the second antenna, a transmission pattern for the scheduling request that corresponds to the second antenna; and
the scheduling, by the network device, an uplink traffic resource for the terminal according to the transmission pattern for the scheduling request includes: scheduling the uplink traffic resource for the terminal according to the transmission pattern for the scheduling request that corresponds to the first antenna and the transmission pattern for the scheduling request that corresponds to the second antenna, where
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

According to a third aspect, an embodiment of the present invention provides a terminal, including: a processing unit, configured to determine a transmission pattern for a scheduling request based on to-be-transmitted uplink data, where the transmission pattern is used to indicate code channel resources that are in one uplink subframe and that are used to carry the scheduling request, and the scheduling request is used to request to schedule an uplink traffic resource to transmit the uplink data; and a sending unit, configured to send the scheduling request to a network device by using the code channel resources indicated by the transmission pattern, so that the network device schedules, for the terminal based on the code channel resources carrying the scheduling request, an uplink traffic resource corresponding to the transmission pattern. In this way, a quantity of times of interaction between the terminal and the network device is reduced, and a delay in scheduling the uplink traffic resource is reduced, thereby improving data transmission efficiency of the terminal.

According to the third aspect, in a first possible implementation of the third aspect, the processing unit is specifically configured to determine the transmission pattern for the scheduling request based on at least one of the following information: a data amount and an emergency degree of the uplink data, so that the uplink traffic resource scheduled by the network device for the terminal matches the data amount and/or the emergency degree of the uplink data.

According to the third aspect or the first possible implementation of the third aspect, in a second possible implementation of the third aspect, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

According to any one of the third aspect or the foregoing possible implementations of the third aspect, in a third possible implementation of the third aspect, the processing unit is specifically configured to: determine, in K preset scheduling request transmission patterns based on the to-be-transmitted uplink data, the transmission pattern for the scheduling request that corresponds to the to-be-transmitted uplink data, where the K preset scheduling request transmission patterns are obtained by M preset code channel resources for carrying a scheduling request, K is a positive integer less than or equal to M*M, and M is a positive integer greater than or equal to 2. Therefore, types of the transmission patterns for the SR are increased.

According to the third possible implementation of the third aspect, in a fourth possible implementation of the third aspect, M is 2 or 3, thereby ensuring reliability of scheduling of the uplink traffic resource.

According to any one of the third aspect or the foregoing possible implementations of the third aspect, in a fifth possible implementation of the third aspect, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

According to any one of the third aspect or the foregoing possible implementations of the third aspect, in a sixth possible implementation of the third aspect, the terminal includes a first antenna and a second antenna;
the processing unit is specifically configured to determine, according to the to-be-transmitted uplink data, a transmission pattern for the scheduling request that corresponds to the first antenna and a transmission pattern for the scheduling request that corresponds to the second antenna; and
the sending unit is specifically configured to: send the scheduling request to the network device by using the first antenna and a code channel resource indicated by the transmission pattern for the scheduling request that corresponds to the first antenna; and send the scheduling request to the network device by using the second antenna and a code channel resource indicated by the transmission pattern for the scheduling request that corresponds to the second antenna, where
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

According to a fourth aspect, an embodiment of the present invention provides a network device, including: a receiving unit, configured to receive a scheduling request sent by a terminal, where the scheduling request is used to request to schedule an uplink traffic resource to transmit uplink data; a determining unit, configured to determine a transmission pattern for the scheduling request based on code channel resources for carrying the scheduling request, where the transmission pattern for the scheduling request is used to indicate code channel resources that are in one uplink subframe and that are used to carry the scheduling request; and a scheduling unit, configured to schedule an uplink traffic resource for the terminal according to the transmission pattern for the scheduling request. In this way, a quantity of times of interaction between the terminal and the network device is reduced, and a delay in scheduling the uplink traffic resource is reduced, thereby improving data transmission efficiency of the terminal.

According to the fourth aspect, in a first possible implementation of the fourth aspect, the scheduling unit is specifically configured to: determine a type of the scheduling request based on the transmission pattern for the scheduling request, where the type of the scheduling request is used to indicate at least one of the following information: a data amount of the uplink data and an emergency degree of the uplink data; and schedule the uplink traffic resource for the terminal according to the type of the scheduling request, so that the uplink traffic resource scheduled by the network device for the terminal matches the data amount and/or the emergency degree of the uplink data.

According to the fourth aspect or the first possible implementation of the fourth aspect, in a second possible implementation of the fourth aspect, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

According to any one of the fourth aspect or the foregoing possible implementations of the fourth aspect, in a third possible implementation of the fourth aspect, the determining unit is specifically configured to determine, in K preset scheduling request transmission patterns based on the code channel resources for carrying the scheduling request, the transmission pattern for the scheduling request that corresponds to the uplink data, where the M*M preset scheduling request transmission patterns are obtained by M preset code channel resources for carrying a scheduling request, K is a positive integer less than or equal to M*M, and M is a positive integer greater than or equal to 2. Therefore, types of the transmission patterns for the SR are increased.

According to the third possible implementation of the fourth aspect, in a fourth possible implementation of the fourth aspect, M is 2 or 3, thereby ensuring reliability of scheduling of the uplink traffic resource.

According to any one of the fourth aspect or the foregoing possible implementations of the fourth aspect, in a fifth possible implementation of the fourth aspect, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N; and
the determining unit is specifically configured to: determine, based on the code channel resources for carrying the scheduling request, that the first code channel resource in the first timeslot belongs to the i^{th} RB and the second code channel resource in the second timeslot belongs to the j^{th} RB; and determine the transmission pattern for the scheduling request based on the i^{th} RB in the first timeslot and the j^{th} RB in the second timeslot.

According to any one of the fourth aspect or the foregoing possible implementations of the fourth aspect, in a sixth possible implementation of the fourth aspect, the terminal includes a first antenna and a second antenna;
the receiving unit is specifically configured to: receive the scheduling request that is sent by the terminal by using the first antenna and the scheduling request that is sent by the terminal by using the second antenna;
the determining unit is specifically configured to: determine, according to a code channel resource for carrying the scheduling request that is sent by the terminal by using the first antenna, a transmission pattern for the scheduling request that corresponds to the first antenna; and determine, according to a code channel resource for carrying the scheduling request that is sent by the terminal by using the second antenna, a transmission pattern for the scheduling request that corresponds to the second antenna; and
the scheduling unit is specifically configured to schedule the uplink traffic resource for the terminal according to the transmission pattern for the scheduling request that corresponds to the first antenna and the transmission pattern for the scheduling request that corresponds to the second antenna, where
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

According to a fifth aspect, an embodiment of the present invention provides a terminal, including: a processor, configured to determine a transmission pattern for a scheduling request based on to-be-transmitted uplink data, where the transmission pattern is used to indicate code channel resources that are in one uplink subframe and that are used to carry the scheduling request, and the scheduling request is used to request to schedule an uplink traffic resource to transmit the uplink data; and a transceiver, configured to send the scheduling request to a network device by using the code channel resources indicated by the transmission pattern, so that the network device schedules, for the terminal based on the code channel resources carrying the scheduling request, an uplink traffic resource corresponding to the transmission pattern. In this way, a quantity of times of interaction between the terminal and the network device is reduced, and a delay in scheduling the uplink traffic resource is reduced, thereby improving data transmission efficiency of the terminal.

According to the fifth aspect, in a first possible implementation of the fifth aspect, the processor is specifically configured to determine the transmission pattern for the scheduling request based on at least one of the following information: a data amount and an emergency degree of the uplink data, so that the uplink traffic resource scheduled by the network device for the terminal matches the data amount and/or the emergency degree of the uplink data.

According to the fifth aspect or the first possible implementation of the fifth aspect, in a second possible implementation of the fifth aspect, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

According to any one of the fifth aspect or the foregoing possible implementations of the fifth aspect, in a third possible implementation of the fifth aspect, the processor is specifically configured to: determine, in K preset scheduling request transmission patterns based on the to-be-transmitted uplink data, the transmission pattern for the scheduling request that corresponds to the to-be-transmitted uplink data, where the K preset scheduling request transmission patterns are obtained by M preset code channel resources for carrying a scheduling request, K is a positive integer less than or equal to M*M, and M is a positive integer greater than or equal to 2. Therefore, types of the transmission patterns for the SR are increased.

According to the third possible implementation of the fifth aspect, in a fourth possible implementation of the fifth aspect, M is 2 or 3, thereby ensuring reliability of scheduling of the uplink traffic resource.

According to any one of the fifth aspect or the foregoing possible implementations of the fifth aspect, in a fifth possible implementation of the fifth aspect, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

According to any one of the fifth aspect or the foregoing possible implementations of the fifth aspect, in a sixth possible implementation of the fifth aspect, the terminal includes a first antenna and a second antenna;
the processor is specifically configured to determine, according to the to-be-transmitted uplink data, a transmission pattern for the scheduling request that corresponds to the first antenna and a transmission pattern for the scheduling request that corresponds to the second antenna; and
the transceiver is specifically configured to: send the scheduling request to the network device by using the first antenna and a code channel resource indicated by the transmission pattern for the scheduling request that corresponds to the first antenna; and send the scheduling request to the network device by using the second antenna and a code channel resource indicated by the transmission pattern for the scheduling request that corresponds to the second antenna, where
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

According to a sixth aspect, an embodiment of the present invention provides a network device, including: a transceiver, configured to receive a scheduling request sent by a terminal, where the scheduling request is used to request to schedule an uplink traffic resource to transmit uplink data; a processor, configured to: determine a transmission pattern for the scheduling request based on code channel resources for carrying the scheduling request, where the transmission pattern for the scheduling request is used to indicate code channel resources that are in one uplink subframe and that are used to carry the scheduling request; and schedule an uplink traffic resource for the terminal according to the transmission pattern for the scheduling request In this way, a quantity of times of interaction between the terminal and the network device is reduced, and a delay in scheduling the uplink traffic resource is reduced, thereby improving data transmission efficiency of the terminal.

According to the sixth aspect, in a first possible implementation of the sixth aspect, when scheduling the uplink traffic resource for the terminal according to the transmission pattern for the scheduling request, the processor is specifically configured to: determine a type of the scheduling request based on the transmission pattern for the scheduling request, where the type of the scheduling request is used to indicate at least one of the following information: a data amount of the uplink data and an emergency degree of the uplink data; and schedule the uplink traffic resource for the terminal according to the type of the scheduling request, so that the uplink traffic resource scheduled by the network device for the terminal matches the data amount and/or the emergency degree of the uplink data.

According to the sixth aspect or the first possible implementation of the sixth aspect, in a second possible implementation of the sixth aspect, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

According to any one of the sixth aspect or the foregoing possible implementations of the sixth aspect, in a third possible implementation of the sixth aspect, when determining the transmission pattern for the scheduling request based on the code channel resources for carrying the scheduling request, the processor is specifically configured to determine, in K preset scheduling request transmission patterns based on the code channel resources for carrying the scheduling request, the transmission pattern for the scheduling request that corresponds to the uplink data, where the M*M preset scheduling request transmission patterns are obtained by M preset code channel resources for carrying a scheduling request, K is a positive integer less than or equal to M*M, and M is a positive integer greater than or equal to 2. Therefore, types of the transmission patterns for the SR are increased.

According to the third possible implementation of the sixth aspect, in a fourth possible implementation of the sixth aspect, M is 2 or 3, thereby ensuring reliability of scheduling of the uplink traffic resource.

According to any one of the sixth aspect or the foregoing possible implementations of the sixth aspect, in a fifth possible implementation of the sixth aspect, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N; and
when determining the transmission pattern for the scheduling request based on the code channel resources for carrying the scheduling request, the processor is specifically configured to: determine, based on the code channel resources for carrying the scheduling request, that the first code channel resource in the first timeslot belongs to the i^{th} RB and the second code channel resource in the second timeslot belongs to the j^{th} RB; and determine the transmission pattern for the scheduling request based on the i^{th} RB in the first timeslot and the j^{th} RB in the second timeslot.

According to any one of the sixth aspect or the foregoing possible implementations of the sixth aspect, in a sixth possible implementation of the sixth aspect, the terminal includes a first antenna and a second antenna;
the transceiver is specifically configured to: receive the scheduling request that is sent by the terminal by using the first antenna and the scheduling request that is sent by the terminal by using the second antenna;
when determining the transmission pattern for the scheduling request based on the code channel resources for carrying the scheduling request, the processor is specifically configured to: determine, according to a code channel resource for carrying the scheduling request that is sent by the terminal by using the first antenna, a transmission pattern for the scheduling request that corresponds to the first antenna; and determine, according to a code channel resource for carrying the scheduling request that is sent by the terminal by using the second antenna, a transmission pattern for the scheduling request that corresponds to the second antenna; and
when scheduling the uplink traffic resource for the terminal according to the transmission pattern for the scheduling request, the processor is specifically configured to: schedule the uplink traffic resource for the terminal according to the transmission pattern for the scheduling request that corresponds to the first antenna and the transmission pattern for the scheduling request that corresponds to the second antenna, where
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

According to a seventh aspect, an embodiment of the present invention provides an uplink traffic resource scheduling system, including: at least one terminal according to any one of the third aspect or the possible implementations of the third aspect, and the network device according to any one of the fourth aspect or the possible implementations of the fourth aspect; or at least one terminal according to any one of the fifth aspect or the possible implementations of the fifth aspect, and the network device according to any one of the sixth aspect or the possible implementations of the sixth aspect. In this way, a quantity of times of interaction between the terminal and the network device is reduced, and a delay in scheduling the uplink traffic resource is reduced, thereby improving data transmission efficiency of the terminal.

By means of the uplink traffic resource scheduling method, the device, and the system provided in the embodiments of the present invention, a quantity of times of interaction between the terminal and the network device is reduced, and a delay in scheduling the uplink traffic resource is reduced, thereby improving data transmission efficiency of the terminal.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of an application scenario according to the embodiments of the present invention;
FIG. 2 is a flowchart of an uplink traffic resource scheduling method according to Embodiment 1 of the present invention;
FIG. 3 is a first schematic diagram of a transmission pattern for an SR according to an embodiment of the present invention;
FIG. 4 is a second schematic diagram of transmission patterns for an SR according to an embodiment of the present invention;
FIG. 5 is a third schematic diagram of transmission patterns for an SR according to an embodiment of the present invention;
FIG. 6 is a fourth schematic diagram of transmission patterns for an SR according to an embodiment of the present invention;
FIG. 7 is a fifth schematic diagram of transmission patterns for an SR according to an embodiment of the present invention;
FIG. 8 is a flowchart of an uplink traffic resource scheduling method according to Embodiment 4 of the present invention;
FIG. 9 is a sixth schematic diagram of transmission patterns for an SR according to an embodiment of the present invention;
FIG. 10 is a schematic structural diagram of a terminal according to Embodiment 1 of the present invention;
FIG. 11 is a schematic structural diagram of a network device according to Embodiment 1 of the present invention;
FIG. 12 is a schematic structural diagram of a terminal according to Embodiment 2 of the present invention;
FIG. 13 is a schematic structural diagram of a network device according to Embodiment 2 of the present invention; and
FIG. 14 is a schematic structural diagram of an uplink traffic resource scheduling system according to Embodiment 1 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

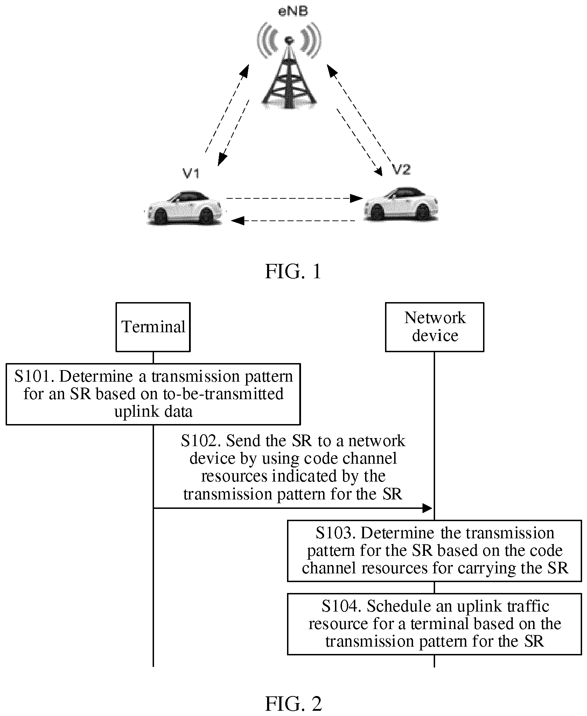

FIG. 1 is a schematic diagram of an application scenario according to the embodiments of the present invention. The embodiments of the present invention are mainly applied to an LTE communications system. Herein, vehicle-to-vehicle communication in the LTE communications system is used as an example. As shown in FIG. 1, the application scenario shown in FIG. 1 is a system for communication between a vehicle (V1) and another vehicle (V2). To implement the communication between the V1 and the V2, a network device such as an eNodeB (eNB) in the LTE communications system separately controls the V1 and the V2 and schedules an uplink traffic resource. A terminal in the embodiments of the present invention may correspond to the V1 or the V2 in FIG. 1, and the network device in the embodiments of the present invention corresponds to the eNB in FIG. 1. Implementation solutions of the present invention are described in detail below based on the application scenario shown in FIG. 1. It should be noted that, application scenarios of the embodiments of the present invention are not limited to the application scenario shown in FIG. 1.

FIG. 2 is a flowchart of an uplink traffic resource scheduling method according to Embodiment 1 of the present invention. As shown in FIG. 2, the method in this embodiment may include the following steps.

S101. A terminal determines a transmission pattern for an SR according to to-be-transmitted uplink data.

In this embodiment, when the terminal needs to transmit uplink data, the terminal needs to send an SR to a network device. The SR is used to request to schedule an uplink traffic resource to transmit the uplink data. Before sending the SR, the terminal may determine the uplink data that needs to transmitted, and then determine, according to the to-be-transmitted uplink data, a transmission pattern for the SR that corresponds to the to-be-transmitted uplink data. The transmission pattern for the SR is used to indicate code channel resources that are in one uplink subframe and that are used to carry the SR. That is, the transmission pattern for the SR may indicate the code channel resources that are in one uplink subframe and that are used to carry the SR when the terminal sends the SR. Therefore, the terminal may determine different transmission patterns for SRs according to different to-be-transmitted uplink data, so that the to-be-transmitted uplink data can be distinguished when the SRs are sent.

S102. The terminal sends the SR to a network device by using code channel resources indicated by the transmission pattern for the SR; and the network device receives the SR sent by the terminal.

In this embodiment, the terminal adds an SR to code channel resources indicated by a transmission pattern for the SR, and sends the SR to the network device. Correspondingly, the network device receives the SR sent by the terminal.

S103. The network device determines the transmission pattern for the SR based on the code channel resources for carrying the SR.

In this embodiment, after receiving the SR sent by the terminal, the network device may determine code channel resources that are in one uplink subframe and that carry the received SR, and may determine a corresponding transmission pattern for the SR based on the code channel resources that are in one uplink subframe and that carry the SR.

S104. The network device schedules an uplink traffic resource for the terminal according to the transmission pattern for the SR.

In this embodiment, after determining the transmission pattern for the SR that is sent by the terminal, the network device determines, according to the transmission pattern for the SR, uplink data that is to be transmitted by the UE and that corresponds to the transmission pattern for the SR, and then schedules an uplink traffic resource for the terminal. Therefore, the network device may schedule, according to the scheduling pattern for the SR, different uplink traffic resources for different uplink data to be transmitted by the terminal, and does not need to wait to send a BSR until the terminal sends the SR. Therefore, according to this embodiment of the present invention, a quantity of times of interaction between the terminal and the network device is reduced, and a delay in scheduling the uplink traffic resource is reduced, thereby improving data transmission efficiency of the terminal.

Optionally, in a specific implementation of S101, the terminal may determine the transmission pattern for the scheduling request based on at least one of the following information of the uplink data to be transmitted by the terminal: a data amount of the uplink data and an emergency degree of the uplink data. For example, if the data amount of the to-be-transmitted uplink data is greater than a preset value, it is determined that the transmission pattern for the scheduling request is a first transmission pattern. If the data amount of the to-be-transmitted uplink data is less than a preset value, it is determined that the transmission pattern for the scheduling request is a second transmission pattern. For example, if the emergency degree of the to-be-transmitted uplink data is not emergent, it is determined that the transmission pattern for the SR is a first transmission pattern. The first transmission pattern may be a transmission pattern for an SR in the prior art. If the emergency degree of the to-be-transmitted uplink data is emergent, it is determined that the transmission pattern for the SR is a second transmission pattern.

Correspondingly, in a specific implementation of S104, the network device determines a type of the SR according to the determined transmission pattern for the SR. The type of the SR is used to indicate at least one of the following information of the uplink data to be transmitted by the terminal: a data amount of the uplink data and an emergency degree of the uplink data. Then the network device schedules an uplink traffic resource for the terminal based on at least one of the following determined information of the to-be-transmitted uplink data: the data amount of the uplink data and the emergency degree of the uplink data. For example, if it is determined that the transmission pattern for the SR is a first transmission pattern, it may be determined that the type of the SR is used to indicate that the data amount of the uplink data to be transmitted by the terminal is greater than a preset value, so that a first uplink traffic resource is scheduled for the terminal. If it is determined that the transmission pattern for the SR is a second transmission pattern, it may be determined that the type of the SR is used to indicate that the data amount of the uplink data to be transmitted by the terminal is less than a preset value, so that a second uplink traffic resource is scheduled for the terminal. The first uplink traffic resource is greater than the second uplink traffic resource. For example, if it is determined that the transmission pattern for the SR is a first transmission pattern, where the first transmission pattern may be a transmission pattern for an SR in the prior art, it may be determined that the type of the SR is used to indicate that the emergency degree of the uplink data to be transmitted by the terminal is not emergent, and the network device waits to receive a BSR sent by the terminal, and then schedules a first uplink traffic resource for the terminal according to the BSR. If it is determined that the transmission pattern for the SR is a second transmission pattern, it may be determined that the type of the SR is used to indicate that the emergency degree of the uplink data to be transmitted by the terminal is emergent, and the network device directly schedules an uplink traffic resource for the terminal. Therefore, the network device may schedule, according to the scheduling pattern for the SR, different uplink traffic resources for different uplink data to be transmitted by the terminal, where the scheduled uplink traffic resources match the uplink data to be transmitted by the terminal, and does not need to wait to send a BSR until the terminal sends the SR. Therefore, according to this embodiment of the present invention, a quantity of times of interaction between the terminal and the network device is reduced, and a delay in scheduling the uplink traffic resource is reduced, thereby improving data transmission efficiency of the terminal.

In an uplink traffic resource scheduling method according to Embodiment 2 of the present invention, in this embodiment based on Embodiment 1 of the present invention, optionally, the transmission pattern for the SR is used to indicate two code channel resources that are in one uplink subframe and that are used to carry the SR. The two code channel resources are a first code channel resource and a second code channel resource. The first code channel resource is in a first timeslot in the uplink subframe, and the second code channel resource is in a second timeslot in the uplink subframe.

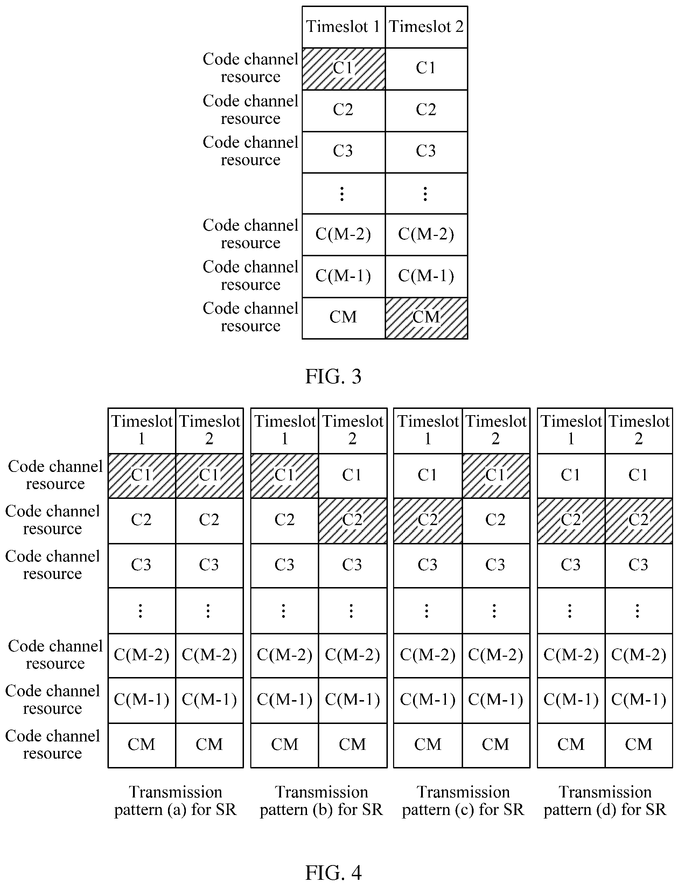

Specifically, one uplink subframe includes two timeslots, which are respectively referred to as a first timeslot and a second timeslot. In this embodiment, one uplink subframe includes a first code channel resource and a second code channel resource that can carry an SR. The first code channel resource is in the first timeslot, and the second code channel resource is in the second timeslot. The first code channel resource that is in the first timeslot and that is for carrying the SR may be any code channel resource in the first timeslot, and the second code channel resource that is in the second timeslot and that is for carrying the SR may be any code channel resource in the second timeslot. Specifically, the terminal selects, by depending on the uplink data to be transmitted by the terminal, a code channel resource in the first timeslot and a code channel resource in the second timeslot to carry the SR. FIG. 3 is a first schematic diagram of a transmission pattern for an SR according to an embodiment of the present invention. As shown in FIG. 3, the first timeslot is a timeslot 1 shown in FIG. 3, and the second timeslot is a timeslot 2 shown in FIG. 3. The transmission pattern for the SR shown in FIG. 3 indicates that a code channel resource whose index number is C1 in the timeslot 1 in an uplink subframe is for carrying the SR, and a code channel resource whose index number is CM in the timeslot 2 is for carrying the SR.

Optionally, based on Embodiment 2 of the present invention, an optional implementation of S101 is: determining, by the terminal in K preset SR transmission patterns based on the to-be-transmitted uplink data, the transmission pattern for the SR that corresponds to the uplink data that is to be transmitted by the terminal, where the K preset scheduling request transmission patterns are obtained by M preset code channel resources for carrying a scheduling request, M is a positive integer greater than or equal to 2, and K is a positive integer less than or equal to M*M. Correspondingly, an optional implementation of S104 is: determining, by the network device in the K preset scheduling request transmission patterns based on the code channel resources for carrying the SR, a transmission pattern for the SR that corresponds to the uplink data.

Specifically, M code channel resources that may be used to carry a scheduling request may be preconfigured. For a code channel resource that is for carrying an SR and that is in the first timeslot, the code channel resource (that is, the first code channel resource) may be selected from the M code channel resources to transmit the SR. For a code channel resource that is for carrying an SR and that is in the second timeslot, the code channel resource (that is, the second code channel resource) may also be selected from the M code channel resources to transmit the SR. In this way, M*M transmission patterns for the SR are formed. In this embodiment, K transmission patterns for the SR may be determined in the M*M transmission patterns for the SR to transmit the SR. Therefore, the terminal may determine, in the K transmission patterns for the SR according to the to-be-transmitted uplink data, a transmission pattern for the SR that corresponds to the uplink data. Correspondingly, the network device determines, in the K transmission patterns for the SR based on the code channel resources for carrying the SR, a transmission pattern for the SR that corresponds to the uplink data that is to be transmitted by the terminal, and then schedules an uplink traffic resource for the terminal according to the determined transmission pattern for the SR. For example, the network device may determine, according to a transmission pattern for an SR, an uplink traffic resource scheduling solution corresponding to the transmission pattern for the SR, and schedules an uplink traffic resource for the terminal according to the uplink traffic resource scheduling solution. For another example, if transmission patterns 1 to K for an SR respectively correspond to uplink traffic resource scheduling solutions 1 to K, and the network device determines that the transmission pattern for the SR is a transmission pattern 1 for the SR, the network device may schedule an uplink traffic resource for the terminal according to the uplink traffic resource scheduling solution 1.

Optionally, M is 2. That is, two code channel resources are preconfigured to transmit an SR. Correspondingly, four transmission patterns for the SR may be formed, that is, K is equal to M*M. FIG. 4 is a second schematic diagram of transmission patterns for an SR according to an embodiment of the present invention. As shown in FIG. 4, four transmission patterns (a) to (d) for an SR are provided in this embodiment of the present invention by using an example in which two code channel resources are respectively a code channel resource whose index number is C1 and a code channel resource whose index number is C2. The transmission pattern (a) for the SR is used to indicate that a code channel resource whose index number is C1 in a timeslot 1 and a code channel resource whose index number is C1 in a timeslot 2 in a subframe are used to transmit the SR. The transmission pattern (b) for the SR is used to indicate that a code channel resource whose index number is C1 in a timeslot 1 and a code channel resource whose index number is C2 in a timeslot 2 in a subframe are used to transmit the SR. The transmission pattern (c) for the SR is used to indicate that a code channel resource whose index number is C2 in a timeslot 1 and a code channel resource whose index number is C1 in a timeslot 2 in a subframe are used to transmit the SR. The transmission pattern (d) for the SR is used to indicate that a code channel resource whose index number is C2 in a timeslot 1 and a code channel resource whose index number is C2 in a timeslot 2 in a subframe are used to transmit the SR.

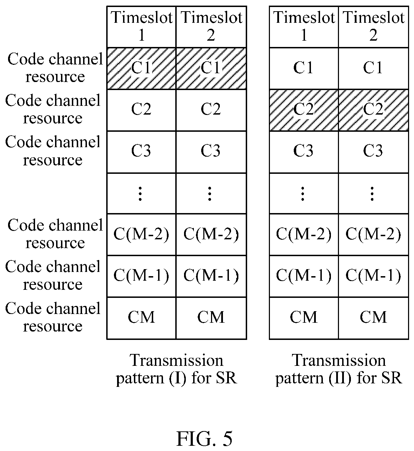

Optionally, M is 2. That is, two code channel resources are preconfigured to transmit an SR. Correspondingly, four transmission patterns for the SR may be formed. Two transmission patterns for the SR are selected from the four transmission patterns for the SR to transmit the SR in this embodiment. K is 2 and is less than M*M. FIG. 5 is a third schematic diagram of transmission patterns for an SR according to an embodiment of the present invention. As shown in FIG. 5, two transmission patterns (I) and (II) for an SR are provided in this embodiment of the present invention by using an example in which two code channel resources are respectively a code channel resource whose index number is C1 and a code channel resource whose index number is C2. The transmission pattern (I) for the SR is used to indicate that a code channel resource whose index number is C1 in a timeslot 1 and a code channel resource whose index number is C1 in a timeslot 2 in a subframe are used to transmit the SR. The transmission pattern (II) for the SR is used to indicate that a code channel resource whose index number is C2 in a timeslot 1 and a code channel resource whose index number is C2 in a timeslot 2 in a subframe are used to transmit the SR.

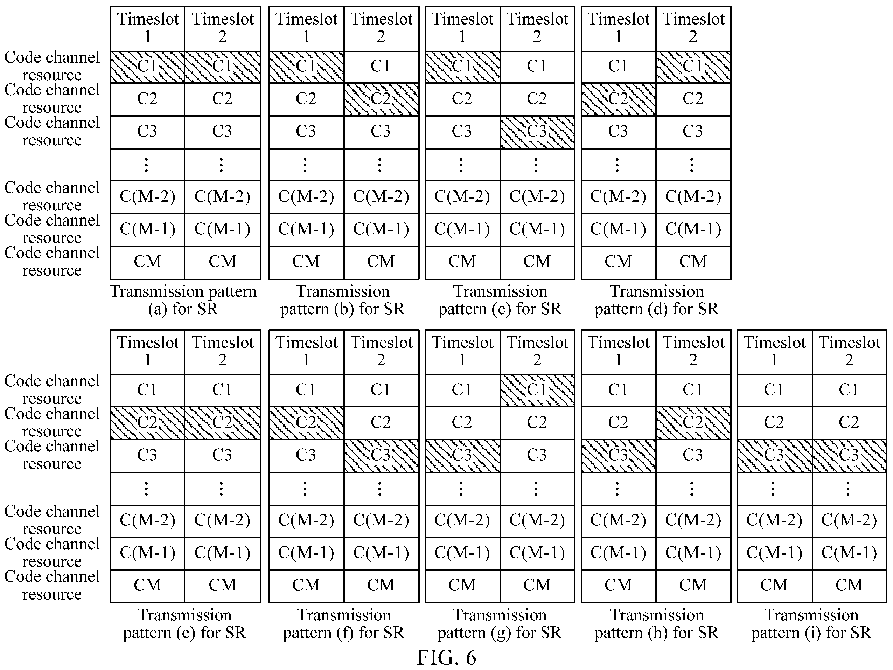

Optionally, M is 3. That is, three code channel resources are preconfigured to transmit an SR. Correspondingly, nine transmission patterns for the SR may be formed. FIG. 6 is a fourth schematic diagram of transmission patterns for an SR according to an embodiment of the present invention. As shown in FIG. 6, nine transmission patterns (a) to (i) for an SR are provided in this embodiment of the present invention by using an example in which three code channel resources are respectively a code channel resource whose index number is C1, a code channel resource whose index number is C2, and a code channel resource whose index number is C3. The transmission pattern (a) for the SR is used to indicate that a code channel resource whose index number is C1 in a timeslot 1 and a code channel resource whose index number is C1 in a timeslot 2 in a subframe are used to transmit the SR. The transmission pattern (b) for the SR is used to indicate that a code channel resource whose index number is C1 in a timeslot 1 and a code channel resource whose index number is C2 in a timeslot 2 in a subframe are used to transmit the SR. The transmission pattern (c) for the SR is used to indicate that a code channel resource whose index number is C1 in a timeslot 1 and a code channel resource whose index number is C3 in a timeslot 2 in a subframe are used to transmit the SR. The transmission pattern (d) for the SR is used to indicate that a code channel resource whose index number is C2 in a timeslot 1 and a code channel resource whose index number is C1 in a timeslot 2 in a subframe are used to transmit the SR. The transmission pattern (e) for the SR is used to indicate that a code channel resource whose index number is C2 in a timeslot 1 and a code channel resource whose index number is C2 in a timeslot 2 in a subframe are used to transmit the SR. The transmission pattern (f) for the SR is used to indicate that a code channel resource whose index number is C2 in a timeslot 1 and a code channel resource whose index number is C3 in a timeslot 2 in a subframe are used to transmit the SR. The transmission pattern (g) for the SR is used to indicate that a code channel resource whose index number is C3 in a timeslot 1 and a code channel resource whose index number is C1 in a timeslot 2 in a subframe are used to transmit the SR. The transmission pattern (h) for the SR is used to indicate that a code channel resource whose index number is C3 in a timeslot 1 and a code channel resource whose index number is C2 in a timeslot 2 in a subframe are used to transmit the SR. The transmission pattern (i) for the SR is used to indicate that a code channel resource whose index number is C3 in a timeslot 1 and a code channel resource whose index number is C3 in a timeslot 2 in a subframe are used to transmit the SR.

In an uplink traffic resource scheduling method according to Embodiment 3 of the present invention, in this embodiment based on Embodiment 2 of the present invention, the first timeslot and the second timeslot each include N RBs. A code channel resource that is in the first timeslot and that is for carrying an SR belongs to the i^{th} RB, and a code channel resource that is in the second timeslot and that is for carrying an SR belongs to the j^{th} RB. i is an integer greater than or equal to 1 and less than or equal to N, and j is an integer greater than or equal to 1 and less than or equal to N. That is, the terminal determines, according to to-be-transmitted uplink data, an RB that is in the first timeslot and that is for transmitting the SR and an RB that is in the second timeslot and that is for transmitting the SR. The RB in the first timeslot may select any code channel resource in the RB to transmit the SR, and the RB in the second timeslot may select any code channel resource in the RB to transmit the SR. Correspondingly, the network device determines, based on the code channel resources for carrying the SR, an RB to which the code channel resources for carrying the SR belong; and determines, according to the RB to which the code channel resources for carrying the SR belong, a transmission pattern for the SR. That is, after receiving the SR, the network device may determine the code channel resources for carrying the SR, and can further determine the RB to which the code channel resources belong, and then determine a transmission pattern according to the RB.

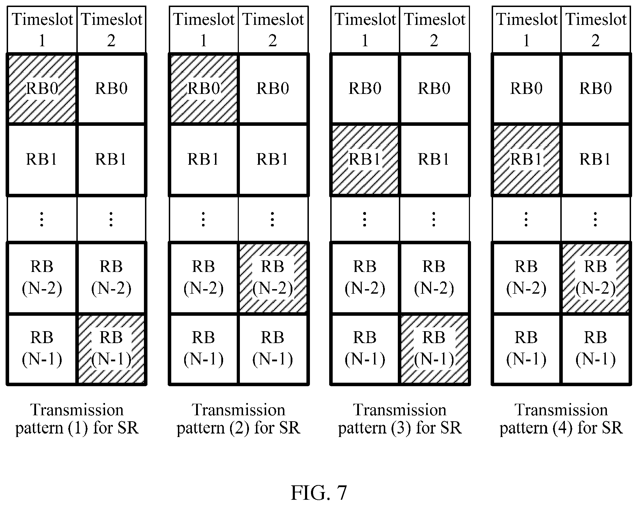

FIG. 7 is a fifth schematic diagram of transmission patterns for an SR according to an embodiment of the present invention. As shown in FIG. 7, a first timeslot is a timeslot 1 shown in FIG. 7, and a second timeslot is a timeslot 2 shown in FIG. 7. Code channel resources that are shown in FIG. 7 and that may carry an SR may belong to the first RB (RB 0 shown in FIG. 7), the second RB (RB 1 shown in FIG. 7), (N-1)^{th} RB (RB (N-2) shown in FIG. 7), and the N^{th} RB (RB (N-1) shown in FIG. 7). Four transmission patterns for the SR are shown in FIG. 7. The transmission pattern (1) for the SR is used to indicate that a code channel resource that is in the timeslot 1 and that is for carrying the SR belongs to RB 0 and a code channel resource that is in the timeslot 2 and that is for carrying the SR belongs to RB (N-1). The transmission pattern (2) for the SR is used to indicate that a code channel resource that is in the timeslot 1 and that is for carrying the SR belongs to RB 0 and a code channel resource that is in the timeslot 2 and that is for carrying the SR belongs to RB (N-2). The transmission pattern (3) for the SR is used to indicate that a code channel resource that is in the timeslot 1 and that is for carrying the SR belongs to RB 1 and a code channel resource that is in the timeslot 2 and that is for carrying the SR belongs to RB (N-1). The transmission pattern (4) for the SR is used to indicate that a code channel resource that is in the timeslot 1 and that is for carrying the SR belongs to RB 1 and a code channel resource that is in the timeslot 2 and that is for carrying the SR belongs to RB (N-2).

Optionally, i and j may be the same, or may be different.

Optionally, a sum of i and j is equal to N+1. That is, the code channel resource in the first timeslot belongs to the i^{th} RB, and the code channel resource in the second timeslot belongs to the (N+1-i)^{th} RB. A location of the RB that is in the first timeslot and that is for carrying the SR and a location of the RB that is in the second timeslot and that is for carrying the SR are symmetric to each other. If the code channel resource that is in the first timeslot and that is for carrying the SR belongs to the first RB, the code channel resource in the second timeslot belongs to the N^{th} RB, for example, the transmission pattern (1) for the SR shown in FIG. 7. If the code channel resource that is in the first timeslot and that is for carrying the SR belongs to the second RB, the code channel resource in the second timeslot belongs to the (N-1)^{th} RB, for example, the transmission pattern (4) for the SR shown in FIG. 7.

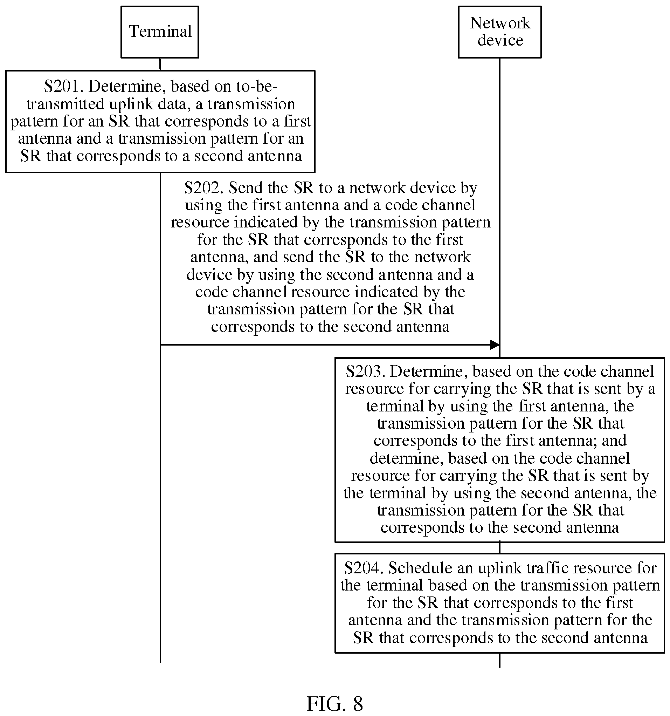

FIG. 8 is a flowchart of an uplink traffic resource scheduling method according to Embodiment 4 of the present invention. As shown in FIG. 8, a terminal in this embodiment includes two antennas, which are respectively a first antenna and a second antenna. The method in this embodiment may include the following steps.

S201. The terminal determines, according to to-be-transmitted uplink data, a transmission pattern for an SR that corresponds to the first antenna and a transmission pattern for an SR that corresponds to the second antenna.

In this embodiment, after determining the uplink data that needs to be transmitted, the terminal needs to send an SR to a network device. The terminal in this embodiment includes the first antenna and the second antenna. Therefore, the terminal sends an SR to the network device by using the first antenna and sends an SR to the network device by using the second antenna. Before the terminal sends the SRs to the network device by using the first antenna and the second antenna, the terminal may determine, according to the to-be-transmitted uplink data, the transmission pattern for the SR that corresponds to the first antenna and the transmission pattern for the SR that corresponds to the second antenna. The transmission pattern for the SR that corresponds to the first antenna is used to indicate code channel resources that are in one uplink subframe and that are used to carry the SR that is transmitted by using the first antenna. That is, the transmission pattern for the SR that corresponds to the first antenna may indicate code channel resources that are in the uplink subframe and that are used to carry the SR when the terminal sends the SR by using the first antenna. The transmission pattern for the SR that corresponds to the second antenna is used to indicate code channel resources that are in one uplink subframe and that are used to carry the SR that is transmitted by using the second antenna. That is, the transmission pattern for the SR that corresponds to the second antenna may indicate code channel resources that are in the uplink subframe and that are used to carry the SR when the terminal sends the SR by using the second antenna. Therefore, the terminal may determine, according to different to-be-transmitted uplink data, transmission patterns for SRs that correspond to different first antennas and transmission patterns for SRs that correspond to different second antennas, so that when the SR is sent, the to-be-transmitted uplink data is distinguished.

S202. The terminal sends an SR to a network device by using the first antenna and a code channel resource indicated by the transmission pattern for the SR that corresponds to the first antenna, and sends an SR to the network device by using the second antenna and a code channel resource indicated by the transmission pattern for the SR that corresponds to the second antenna; and the network device receives the SR that is sent by the terminal by using the first antenna and the SR that is sent by the terminal by using the second antenna.

In this embodiment, the terminal adds an SR to a code channel resource indicated by a transmission pattern for the SR that corresponds to the first antenna, and sends the SR to the network device by using the first antenna. Correspondingly, the network device receives the SR that is sent by the terminal by using the first antenna. The terminal further adds an SR to a code channel resource indicated by a transmission pattern for the SR that corresponds to the second antenna, and sends the SR to the network device by using the second antenna. Correspondingly, the network device receives the SR that is sent by the terminal by using the second antenna.

S203. The network device determines, according to the code channel resource for carrying the SR that is sent by the terminal by using the first antenna, the transmission pattern for the SR that corresponds to the first antenna; and determines, according to the code channel resource for carrying the SR that is sent by the terminal by using the second antenna, the transmission pattern for the SR that corresponds to the second antenna.

In this embodiment, after receiving the SR that is sent by the terminal by using the first antenna, the network device may determine code channel resources that are in one uplink subframe and that carry the received SR, and may determine, based on the code channel resources that are in one uplink subframe and that carry the SR, a transmission pattern for the SR that corresponds to the first antenna. After receiving the SR that is sent by the terminal by using the second antenna, the network device may determine code channel resources that are in one uplink subframe and that carry the received SR, and may determine, based on the code channel resources that are in one uplink subframe and that carry the SR, a transmission pattern for the SR that corresponds to the second antenna.

S204. The network device schedules an uplink traffic resource according to the transmission pattern for the SR that corresponds to the first antenna and the transmission pattern for the SR that corresponds to the second antenna.

In this embodiment, after determining the transmission pattern for the SR that corresponds to the first antenna and the transmission pattern for the SR that corresponds to the second antenna, the network device determines, according to the transmission pattern for the SR that corresponds to the first antenna and the transmission pattern for the SR that corresponds to the second antenna, corresponding uplink data to be transmitted by the UE, and further schedules an uplink traffic resource for the terminal. Therefore, the network device may schedule, according to the transmission pattern for the SR that corresponds to the first antenna and the transmission pattern for the SR that corresponds to the second antenna, different uplink traffic resources for different uplink data to be transmitted by the terminal, and does not need to wait to send a BSR until the terminal sends the SR. Therefore, according to this embodiment of the present invention, a quantity of times of interaction between the terminal and the network device is reduced, and a delay in scheduling the uplink traffic resource is reduced, thereby improving data transmission efficiency of the terminal.

In this embodiment, the transmission pattern for the SR that corresponds to the first antenna and the transmission pattern for the SR that corresponds to the second antenna may be similar to the transmission patterns for the SR provided in Embodiment 2 and Embodiment 3 of the present invention, and details are not described herein again.

It should be noted that, the code channel resource indicated by the transmission pattern for the SR that corresponds to the first antenna and the code channel resource indicated by the transmission pattern for the SR that corresponds to the second antenna are different code channel resources in a same timeslot in the uplink subframe. That is, the code channel resource that is in the first timeslot and that is for carrying the SR that is sent by the terminal by using the first antenna and the code channel resource that is in the first timeslot and that is for carrying the SR that is sent by the terminal by using the second antenna are different code channel resources. The code channel resource that is in the second timeslot and that is for carrying the SR that is sent by the terminal by using the first antenna and the code channel resource that is in the second timeslot and that is for carrying the SR that is sent by the terminal by using the second antenna are different code channel resources. Therefore, reliability of detection performed on an SR by the network device can be improved and interference is reduced.

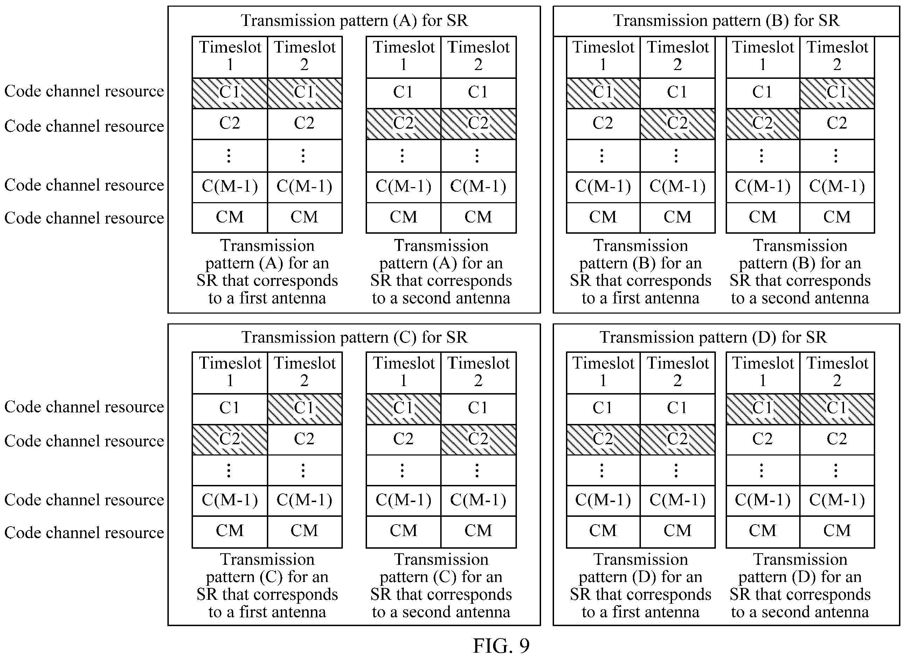

FIG. 9 is a sixth schematic diagram of transmission patterns for an SR according to an embodiment of the present invention. As shown in FIG. 9, this embodiment is described by using an example in which code channel resources whose index numbers are respectively C1 and C2 may be used to carry an SR. Four transmission patterns for the SR are provided in this embodiment, and each transmission pattern for the SR includes a transmission pattern for an SR that corresponds to a first antenna and a transmission pattern for an SR that corresponds to a second antenna.

As shown in FIG. 9, a transmission pattern (A) for the SR includes a transmission pattern (A) for the SR that corresponds to the first antenna and a transmission pattern (A) for the SR that corresponds to the second antenna. The transmission pattern (A) for the SR that corresponds to the first antenna is used to indicate that a code channel resource whose index number is C1 in a timeslot 1 and a code channel resource whose index number is C1 in a timeslot 2 in a subframe are used to transmit the SR. The transmission pattern (A) for the SR that corresponds to the second antenna is used to indicate that a code channel resource whose index number is C2 in a timeslot 1 and a code channel resource whose index number is C2 in a timeslot 2 in a subframe are used to transmit the SR.

A transmission pattern (B) for the SR includes a transmission pattern (B) for the SR that corresponds to the first antenna and a transmission pattern (B) for the SR that corresponds to the second antenna. The transmission pattern (B) for the SR that corresponds to the first antenna is used to indicate that a code channel resource whose index number is C1 in a timeslot 1 and a code channel resource whose index number is C2 in a timeslot 2 in a subframe are used to transmit the SR. The transmission pattern (B) for the SR that corresponds to the second antenna is used to indicate that a code channel resource whose index number is C2 in a timeslot 1 and a code channel resource whose index number is C1 in a timeslot 2 in a subframe are used to transmit the SR.

A transmission pattern (C) for the SR includes a transmission pattern (C) for the SR that corresponds to the first antenna and a transmission pattern (C) for the SR that corresponds to the second antenna. The transmission pattern (C) for the SR that corresponds to the first antenna is used to indicate that a code channel resource whose index number is C2 in a timeslot 1 and a code channel resource whose index number is C1 in a timeslot 2 in a subframe are used to transmit the SR. The transmission pattern (C) for the SR that corresponds to the second antenna is used to indicate that a code channel resource whose index number is C1 in a timeslot 1 and a code channel resource whose index number is C2 in a timeslot 2 in a subframe are used to transmit the SR.

A transmission pattern (D) for the SR includes a transmission pattern (D) for the SR that corresponds to the first antenna and a transmission pattern (D) for the SR that corresponds to the second antenna. The transmission pattern (D) for the SR that corresponds to the first antenna is used to indicate that a code channel resource whose index number is C2 in a timeslot 1 and a code channel resource whose index number is C2 in a timeslot 2 in a subframe are used to transmit the SR. The transmission pattern (D) for the SR that corresponds to the second antenna is used to indicate that a code channel resource whose index number is C1 in a timeslot 1 and a code channel resource whose index number is C1 in a timeslot 2 in a subframe are used to transmit the SR.

Optionally, in the solutions provided in the embodiments of the present invention, in a scenario, if the terminal determines that, after sending an SR to the network device, the terminal further needs to send a BSR to the network device, the terminal may determine that the transmission pattern for the SR is a first preset transmission pattern, and then send the SR to the network device by using a code channel resource indicated by the first preset transmission pattern. After receiving the SR, the network device determines that the transmission pattern for the SR is the first preset transmission pattern according to the code channel resource for carrying the SR, and may determine to allocate an uplink traffic resource to the terminal after receiving the BSR sent by the terminal. The first preset transmission pattern may be a transmission pattern for an SR in the prior art.

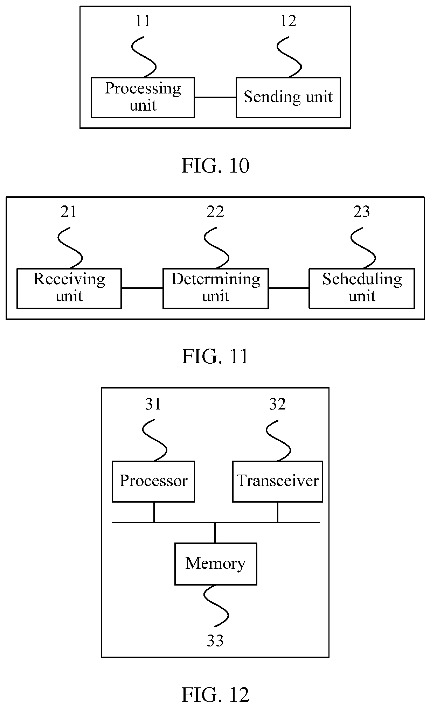

FIG. 10 is a schematic structural diagram of the terminal according to Embodiment 1 of the present invention. As shown in FIG. 10, the terminal in this embodiment may include a processing unit 11 and a sending unit 12. The processing unit 11 is configured to determine a transmission pattern for a scheduling request based on to-be-transmitted uplink data, where the transmission pattern is used to indicate code channel resources that are in one uplink subframe and that are used to carry the scheduling request, and the scheduling request is used to request to schedule an uplink traffic resource to transmit the uplink data. The sending unit 12 is configured to send the scheduling request to a network device by using the code channel resources indicated by the transmission pattern, so that the network device schedules, for the terminal based on the code channel resources carrying the scheduling request, an uplink traffic resource corresponding to the transmission pattern.

Optionally, the processing unit 11 is specifically configured to determine the transmission pattern for the scheduling request based on at least one of the following information: a data amount and an emergency degree of the uplink data.

Optionally, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

Optionally, the processing unit 11 is specifically configured to: determine, in K preset scheduling request transmission patterns based on the to-be-transmitted uplink data, the transmission pattern for the scheduling request that corresponds to the to-be-transmitted uplink data, where the K preset scheduling request transmission patterns are obtained by M preset code channel resources for carrying a scheduling request, K is a positive integer less than or equal to M*M, and M is a positive integer greater than or equal to 2.

Optionally, M is 2 or 3.

Optionally, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

Optionally, the terminal includes a first antenna and a second antenna.

The processing unit 11 is specifically configured to determine, according to the to-be-transmitted uplink data, a transmission pattern for the scheduling request that corresponds to the first antenna and a transmission pattern for the scheduling request that corresponds to the second antenna.

The sending unit 12 is specifically configured to: send the scheduling request to the network device by using the first antenna and a code channel resource indicated by the transmission pattern for the scheduling request that corresponds to the first antenna; and send the scheduling request to the network device by using the second antenna and a code channel resource indicated by the transmission pattern for the scheduling request that corresponds to the second antenna.

The code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

The terminal in this embodiment may be configured to perform the technical solutions performed by the terminals in the foregoing method embodiments of the present invention, the implementation principles and technical effects thereof are similar, and details are not described herein again.

FIG. 11 is a schematic structural diagram of the network device according to Embodiment 1 of the present invention. As shown in FIG. 11, the network device in this embodiment may include: a receiving unit 21, a determining unit 22, and a scheduling unit 23. The receiving unit 21 is configured to receive a scheduling request sent by a terminal, where the scheduling request is used to request to schedule an uplink traffic resource to transmit uplink data. The determining unit 22 is configured to determine a transmission pattern for the scheduling request based on code channel resources for carrying the scheduling request, where the transmission pattern for the scheduling request is used to indicate code channel resources that are in one subframe and that are used to carry the scheduling request. The scheduling unit 23 is configured to schedule an uplink traffic resource for the terminal according to the transmission pattern for the scheduling request.

Optionally, the scheduling unit 23 is specifically configured to: determine a type of the scheduling request based on the transmission pattern for the scheduling request, where the type of the scheduling request is used to indicate at least one of the following information: a data amount of the uplink data and an emergency degree of the uplink data; and schedule the uplink traffic resource for the terminal according to the type of the scheduling request.

Optionally, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

Optionally, the determining unit 22 is specifically configured to determine, in K preset scheduling request transmission patterns based on the code channel resources for carrying the scheduling request, the transmission pattern for the scheduling request that corresponds to the uplink data, where the M*M preset scheduling request transmission patterns are obtained by M preset code channel resources for carrying a scheduling request, K is a positive integer less than or equal to M*M, and M is a positive integer greater than or equal to 2.

Optionally, M is 2 or 3.

Optionally, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

The determining unit 22 is specifically configured to: determine, based on the code channel resources for carrying the scheduling request, that the first code channel resource in the first timeslot belongs to the i^{th} RB and the second code channel resource in the second timeslot belongs to the j^{th} RB; and determine the transmission pattern for the scheduling request based on the i^{th} RB in the first timeslot and the j^{th} RB in the second timeslot.

Optionally, the terminal includes a first antenna and a second antenna.

The receiving unit 21 is specifically configured to: receive the scheduling request that is sent by the terminal by using the first antenna and the scheduling request that is sent by the terminal by using the second antenna.

The determining unit 22 is specifically configured to: determine, according to a code channel resource for carrying the scheduling request that is sent by the terminal by using the first antenna, a transmission pattern for the scheduling request that corresponds to the first antenna; and determine, according to a code channel resource for carrying the scheduling request that is sent by the terminal by using the second antenna, a transmission pattern for the scheduling request that corresponds to the second antenna.

The scheduling unit 23 is specifically configured to schedule the uplink traffic resource for the terminal according to the transmission pattern for the scheduling request that corresponds to the first antenna and the transmission pattern for the scheduling request that corresponds to the second antenna.

The code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

The network device in this embodiment may be configured to perform the technical solutions performed by the network devices in the foregoing method embodiments of the present invention, the implementation principles and technical effects thereof are similar, and details are not described herein again.

FIG. 12 is a schematic structural diagram of the terminal according to Embodiment 2 of the present invention. As shown in FIG. 12, the terminal in this embodiment may include a processor 31 and a transceiver 32. Optionally, the terminal in this embodiment may further include a memory 33, and the memory 33 is configured to store program code for performing an uplink traffic resource scheduling method. The processor 31 is configured to determine a transmission pattern for a scheduling request based on to-be-transmitted uplink data, where the transmission pattern is used to indicate code channel resources that are in one uplink subframe and that are used to carry the scheduling request, and the scheduling request is used to request to schedule an uplink traffic resource to transmit the uplink data. The transceiver 32 is configured to send the scheduling request to a network device by using the code channel resources indicated by the transmission pattern, so that the network device schedules, for the terminal based on the code channel resources carrying the scheduling request, an uplink traffic resource corresponding to the transmission pattern.

Optionally, the processor 31 is specifically configured to determine the transmission pattern for the scheduling request based on at least one of the following information: a data amount and an emergency degree of the uplink data.

Optionally, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

Optionally, the processor 31 is specifically configured to: determine, in K preset scheduling request transmission patterns based on the to-be-transmitted uplink data, the transmission pattern for the scheduling request that corresponds to the to-be-transmitted uplink data, where the K preset scheduling request transmission patterns are obtained by M preset code channel resources for carrying a scheduling request, K is a positive integer less than or equal to M*M, and M is a positive integer greater than or equal to 2.

Optionally, M is 2 or 3.

Optionally, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

Optionally, the terminal includes a first antenna and a second antenna.

The processor 31 is specifically configured to determine, according to the to-be-transmitted uplink data, a transmission pattern for the scheduling request that corresponds to the first antenna and a transmission pattern for the scheduling request that corresponds to the second antenna.

The transceiver 32 is specifically configured to: send the scheduling request to the network device by using the first antenna and a code channel resource indicated by the transmission pattern for the scheduling request that corresponds to the first antenna; and send the scheduling request to the network device by using the second antenna and a code channel resource indicated by the transmission pattern for the scheduling request that corresponds to the second antenna.

The code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

The terminal in this embodiment may be configured to perform the technical solutions performed by the terminals in the foregoing method embodiments of the present invention, the implementation principles and technical effects thereof are similar, and details are not described herein again.

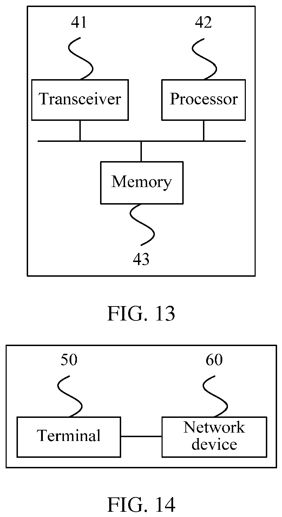

FIG. 13 is a schematic structural diagram of the network device according to Embodiment 2 of the present invention. As shown in FIG. 13, the network device in this embodiment may include: a transceiver 41 and a processor 42. Optionally, the terminal in this embodiment may further include a memory 43, and the memory 43 is configured to store program code for performing an uplink traffic resource scheduling method. The transceiver 41 is configured to receive a scheduling request sent by a terminal, where the scheduling request is used to request to schedule an uplink traffic resource to transmit uplink data. The processor 42 is configured to: determine a transmission pattern for the scheduling request based on code channel resources for carrying the scheduling request, where the transmission pattern for the scheduling request is used to indicate code channel resources that are in one subframe and that are used to carry the scheduling request; and schedule an uplink traffic resource for the terminal according to the transmission pattern for the scheduling request.

Optionally, when scheduling the uplink traffic resource for the terminal according to the transmission pattern for the scheduling request, the processor 42 is specifically configured to: determine a type of the scheduling request based on the transmission pattern for the scheduling request, where the type of the scheduling request is used to indicate at least one of the following information: a data amount of the uplink data and an emergency degree of the uplink data; and schedule the uplink traffic resource for the terminal according to the type of the scheduling request.

Optionally, the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

Optionally, when determining the transmission pattern for the scheduling request based on the code channel resources for carrying the scheduling request, the processor 42 is specifically configured to: determine, in K preset scheduling request transmission patterns based on the code channel resources for carrying the scheduling request, the transmission pattern for the scheduling request that corresponds to the uplink data, where the M*M preset scheduling request transmission patterns are obtained by M preset code channel resources for carrying a scheduling request, K is a positive integer less than or equal to M*M, and M is a positive integer greater than or equal to 2.

Optionally, M is 2 or 3.

Optionally, the first timeslot and the second timeslot each include N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

When determining the transmission pattern for the scheduling request based on the code channel resources for carrying the scheduling request, the processor 42 is specifically configured to: determine, based on the code channel resources for carrying the scheduling request, that the first code channel resource in the first timeslot belongs to the i^{th} RB and the second code channel resource in the second timeslot belongs to the j^{th} RB; and determine the transmission pattern for the scheduling request based on the i^{th} RB in the first timeslot and the j^{th} RB in the second timeslot.

Optionally, the terminal includes a first antenna and a second antenna.

The transceiver 41 is specifically configured to: receive the scheduling request that is sent by the terminal by using the first antenna and the scheduling request that is sent by the terminal by using the second antenna.

The processor 42 is specifically configured to: determine, according to a code channel resource for carrying the scheduling request that is sent by the terminal by using the first antenna, a transmission pattern for the scheduling request that corresponds to the first antenna; and determine, according to a code channel resource for carrying the scheduling request that is sent by the terminal by using the second antenna, a transmission pattern for the scheduling request that corresponds to the second antenna; and schedule the uplink traffic resource for the terminal according to the transmission pattern for the scheduling request that corresponds to the first antenna and the transmission pattern for the scheduling request that corresponds to the second antenna.

The code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

The network device in this embodiment may be configured to perform the technical solutions performed by the network devices in the foregoing method embodiments of the present invention, the implementation principles and technical effects thereof are similar, and details are not described herein again.

FIG. 14 is a schematic structural diagram of an uplink traffic resource scheduling system according to Embodiment 1 of the present invention. As shown in FIG. 14, the system in this embodiment includes at least one terminal 50 (one terminal is shown) and a network device 60. The terminal 50 may use the structure of the apparatus embodiment shown in FIG. 10 or FIG. 12 and can correspondingly perform the technical solutions performed by the terminals in the foregoing method embodiments of the present invention, the implementation principles and technical effects thereof are similar, and details are not described herein again. The network device 60 may use the structure of the apparatus embodiment shown in FIG. 11 or FIG. 13 and can correspondingly perform the technical solutions performed by the network devices in the foregoing method embodiments of the present invention, the implementation principles and technical effects thereof are similar, and details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The storage medium includes: any medium that can store program code, such as a read-only memory (English: Read-Only Memory, ROM for short), a random access memory (English: Random Access Memory, RAM for short), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An uplink traffic resource scheduling method, comprising:
determining, by a terminal, a transmission pattern for a scheduling request based on to-be-transmitted uplink data, wherein the transmission pattern is used to indicate code channel resources that are in one uplink subframe and that are used to carry the scheduling request, and the scheduling request is used to request to schedule an uplink traffic resource to transmit the uplink data; and
sending, by the terminal, the scheduling request to a network device by using the code channel resources indicated by the transmission pattern, so that the network device schedules, for the terminal based on the code channel resources carrying the scheduling request, an uplink traffic resource corresponding to the transmission pattern.

2. The method according to claim 1, wherein the determining, by a terminal, a transmission pattern for a scheduling request based on to-be-transmitted uplink data comprises:
determining, by the terminal, the transmission pattern for the scheduling request based on at least one of the following information: a data amount and an emergency degree of the uplink data.

3. The method according to claim 1 or 2, wherein the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

4. The method according to claim 3, wherein the determining, by a terminal, a transmission pattern for a scheduling request based on to-be-transmitted uplink data comprises:
determining, by the terminal in K preset scheduling request transmission patterns based on the to-be-transmitted uplink data, the transmission pattern for the scheduling request that corresponds to the to-be-transmitted uplink data, wherein the K preset scheduling request transmission patterns are obtained by M preset code channel resources for carrying a scheduling request, K is a positive integer less than or equal to M*M, and M is a positive integer greater than or equal to 2.

5. The method according to claim 4, wherein M is 2 or 3.

6. The method according to claim 3, wherein the first timeslot and the second timeslot each comprise N resource blocks RB, the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

7. The method according to any one of claims 3 to 6, wherein the terminal comprises a first antenna and a second antenna;
the determining, by a terminal, a transmission pattern for a scheduling request based on to-be-transmitted uplink data comprises:
determining, by the terminal according to the to-be-transmitted uplink data, a transmission pattern for the scheduling request that corresponds to the first antenna and a transmission pattern for the scheduling request that corresponds to the second antenna; and
the sending, by the terminal, the scheduling request to a network device by using the code channel resources indicated by the transmission pattern comprises:
sending, by the terminal, the scheduling request to the network device by using the first antenna and a code channel resource indicated by the transmission pattern for the scheduling request that corresponds to the first antenna; and sending the scheduling request to the network device by using the second antenna and a code channel resource indicated by the transmission pattern for the scheduling request that corresponds to the second antenna, wherein
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

8. An uplink traffic resource scheduling method, comprising:
receiving, by a network device, a scheduling request sent by a terminal, wherein the scheduling request is used to request to schedule an uplink traffic resource to transmit uplink data;
determining, by the network device, a transmission pattern for the scheduling request based on code channel resources for carrying the scheduling request, wherein the transmission pattern for the scheduling request is used to indicate code channel resources that are in one uplink subframe and that are used to carry the scheduling request; and
scheduling, by the network device, an uplink traffic resource for the terminal according to the transmission pattern for the scheduling request.

9. The method according to claim 8, wherein the scheduling, by the network device, an uplink traffic resource for the terminal according to the transmission pattern for the scheduling request comprises:
determining, by the network device, a type of the scheduling request based on the transmission pattern for the scheduling request, wherein the type of the scheduling request is used to indicate at least one of the following information: a data amount of the uplink data and an emergency degree of the uplink data; and
scheduling the uplink traffic resource for the terminal according to the type of the scheduling request.

10. The method according to claim 8 or 9, wherein the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

11. The method according to claim 10, wherein the determining, by the network device, a transmission pattern for the scheduling request based on code channel resources for carrying the scheduling request comprises:
determining, by the network device in K preset scheduling request transmission patterns based on the code channel resources for carrying the scheduling request, the transmission pattern for the scheduling request that corresponds to the uplink data, wherein the M*M preset scheduling request transmission patterns are obtained by M preset code channel resources for carrying a scheduling request, K is a positive integer less than or equal to M*M, and M is a positive integer greater than or equal to 2.

12. The method according to claim 11, wherein M is 2 or 3.

13. The method according to claim 10, wherein the first timeslot and the second timeslot each comprise N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N; and
the determining, by the network device, a transmission pattern for the scheduling request based on code channel resources for carrying the scheduling request comprises:
determining, by the network device based on the code channel resources for carrying the scheduling request, that the first code channel resource in the first timeslot belongs to the i^{th} RB and the second code channel resource in the second timeslot belongs to the j^{th} RB; and
determining, by the network device, the transmission pattern for the scheduling request based on the i^{th} RB in the first timeslot and the j^{th} RB in the second timeslot.

14. The method according to any one of claims 10 to 13, wherein the terminal comprises a first antenna and a second antenna;
the receiving, by a network device, a scheduling request sent by a terminal comprises: receiving, by the network device, the scheduling request that is sent by the terminal by using the first antenna and the scheduling request that is sent by the terminal by using the second antenna;
the determining, by the network device, a transmission pattern for the scheduling request based on code channel resources for carrying the scheduling request comprises:
determining, by the network device according to a code channel resource for carrying the scheduling request that is sent by the terminal by using the first antenna, a transmission pattern for the scheduling request that corresponds to the first antenna; and
determining, by the network device according to a code channel resource for carrying the scheduling request that is sent by the terminal by using the second antenna, a transmission pattern for the scheduling request that corresponds to the second antenna; and
the scheduling, by the network device, an uplink traffic resource for the terminal according to the transmission pattern for the scheduling request comprises:
scheduling, by the network device, the uplink traffic resource for the terminal according to the transmission pattern for the scheduling request that corresponds to the first antenna and the transmission pattern for the scheduling request that corresponds to the second antenna, wherein
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

15. A terminal, comprising:
a processing unit, configured to determine a transmission pattern for a scheduling request based on to-be-transmitted uplink data, wherein the transmission pattern is used to indicate code channel resources that are in one uplink subframe and that are used to carry the scheduling request, and the scheduling request is used to request to schedule an uplink traffic resource to transmit the uplink data; and
a sending unit, configured to send the scheduling request to a network device by using the code channel resources indicated by the transmission pattern, so that the network device schedules, for the terminal based on the code channel resources carrying the scheduling request, an uplink traffic resource corresponding to the transmission pattern.

16. The terminal according to claim 15, wherein the processing unit is specifically configured to determine the transmission pattern for the scheduling request based on at least one of the following information: a data amount and an emergency degree of the uplink data.

17. The terminal according to claim 15 or 16, wherein the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

18. The terminal according to claim 17, wherein the processing unit is specifically configured to: determine, in K preset scheduling request transmission patterns based on the to-be-transmitted uplink data, the transmission pattern for the scheduling request that corresponds to the to-be-transmitted uplink data, wherein the K preset scheduling request transmission patterns are obtained by M preset code channel resources for carrying a scheduling request, K is a positive integer less than or equal to M*M, and M is a positive integer greater than or equal to 2.

19. The terminal according to claim 18, wherein M is 2 or 3.

20. The terminal according to claim 17, wherein the first timeslot and the second timeslot each comprise N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N.

21. The terminal according to any one of claims 17 to 20, wherein the terminal comprises a first antenna and a second antenna;
the processing unit is specifically configured to determine, according to the to-be-transmitted uplink data, a transmission pattern for the scheduling request that corresponds to the first antenna and a transmission pattern for the scheduling request that corresponds to the second antenna; and
the sending unit is specifically configured to: send the scheduling request to the network device by using the first antenna and a code channel resource indicated by the transmission pattern for the scheduling request that corresponds to the first antenna; and send the scheduling request to the network device by using the second antenna and a code channel resource indicated by the transmission pattern for the scheduling request that corresponds to the second antenna, wherein
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

22. A network device, comprising:
a receiving unit, configured to receive a scheduling request sent by a terminal, wherein the scheduling request is used to request to schedule an uplink traffic resource to transmit uplink data;
a determining unit, configured to determine a transmission pattern for the scheduling request based on code channel resources for carrying the scheduling request, wherein the transmission pattern for the scheduling request is used to indicate code channel resources that are in one uplink subframe and that are used to carry the scheduling request; and
a scheduling unit, configured to schedule an uplink traffic resource for the terminal according to the transmission pattern for the scheduling request.

23. The network device according to claim 22, wherein the scheduling unit is specifically configured to: determine a type of the scheduling request based on the transmission pattern for the scheduling request, wherein the type of the scheduling request is used to indicate at least one of the following information: a data amount of the uplink data and an emergency degree of the uplink data; and schedule the uplink traffic resource for the terminal according to the type of the scheduling request.

24. The network device according to claim 22 or 23, wherein the transmission pattern for the scheduling request is used to indicate a first code channel resource and a second code channel resource that are in one uplink subframe and that are used to carry the scheduling request, the first code channel resource is in a first timeslot in the uplink subframe, and the second code channel resource is in a second timeslot in the uplink subframe.

25. The network device according to claim 24, wherein the determining unit is specifically configured to determine, in K preset scheduling request transmission patterns based on the code channel resources for carrying the scheduling request, the transmission pattern for the scheduling request that corresponds to the uplink data, wherein the M*M preset scheduling request transmission patterns are obtained by M preset code channel resources for carrying a scheduling request, K is a positive integer less than or equal to M*M, and M is a positive integer greater than or equal to 2.

26. The network device according to claim 25, wherein M is 2 or 3.

27. The network device according to claim 24, wherein the first timeslot and the second timeslot each comprise N RBs, the first code channel resource belongs to the i^{th} RB, the second code channel resource belongs to the j^{th} RB, i is an integer greater than or equal to 1 and less than or equal to N, and j is an integer greater than or equal to 1 and less than or equal to N; and
the determining unit is specifically configured to: determine, based on the code channel resources for carrying the scheduling request, that the first code channel resource in the first timeslot belongs to the i^{th} RB and the second code channel resource in the second timeslot belongs to the j^{th} RB; and determine the transmission pattern for the scheduling request based on the i^{th} RB in the first timeslot and the j^{th} RB in the second timeslot.

28. The network device according to any one of claims 24 to 27, wherein the terminal comprises a first antenna and a second antenna;
the receiving unit is specifically configured to: receive the scheduling request that is sent by the terminal by using the first antenna and the scheduling request that is sent by the terminal by using the second antenna;
the determining unit is specifically configured to: determine, according to a code channel resource for carrying the scheduling request that is sent by the terminal by using the first antenna, a transmission pattern for the scheduling request that corresponds to the first antenna; and determine, according to a code channel resource for carrying the scheduling request that is sent by the terminal by using the second antenna, a transmission pattern for the scheduling request that corresponds to the second antenna; and
the scheduling unit is specifically configured to schedule the uplink traffic resource for the terminal according to the transmission pattern for the scheduling request that corresponds to the first antenna and the transmission pattern for the scheduling request that corresponds to the second antenna, wherein
the code channel resource indicated by the transmission pattern for the scheduling request that corresponds to the first antenna and the code channel resource indicated by the transmission pattern for the scheduling request that corresponds to the second antenna are different code channel resources in a same timeslot in the uplink subframe.

29. An uplink traffic resource scheduling system, comprising at least one terminal according to any one of claims 15 to 21, and the network device according to any one of claims 22 to 28.
